**Europäisches Patentamt**

**European Patent Office**

**Office européen des brevets**

(19)

(11) Publication number: **0 246 019 B1**

## EUROPEAN PATENT SPECIFICATION

(12)

(45) Date of publication of patent specification:
06.03.91 Bulletin 91/10

(51) Int. Cl.⁵: **B29D 23/22, F16L 11/08**

(21) Application number: 87304015.8

(22) Date of filing: 05.05.87

(54) Reinforced hose.

(30) Priority: 05.05.86 US 859552

(43) Date of publication of application:
19.11.87 Bulletin 87/47

(45) Publication of the grant of the patent:
06.03.91 Bulletin 91/10

(84) Designated Contracting States:
DE FR GB IT

(56) References cited:
DE-A- 2 812 916
US-A- 4 104 095
US-A- 4 302 266
US-A- 4 303 457
US-A- 4 341 578
US-A- 4 420 018

(73) Proprietor: PARKER HANNIFIN
CORPORATION
17325 Euclid Avenue
Cleveland Ohio 44112 (US)

(72) Inventor: Washkewica, Donald E.
859 Parkview Drive
Aurora Ohio 44202 (US)
Inventor: Belofsky, Harold
6815 Garrett Road
Ravenna Ohio 44266 (US)

(74) Representative: Purvis, William Michael
Cameron et al
D. Young & Co. 10 Staple Inn
London WC1V 7RD (GB)

## Description

The invention relates to reinforced thermoplastics hose and to a method for producing such hose.

Hoses formed of thermoplastic materials have become commonplace due to the advantages of being relatively light weight and having relatively small dimensions. One of the problems encountered with such hose, however, is maintaining the integrity of the hose which requires that reliable, long lasting adhesive bonds are established between the layers of such hoses.

A further advantage of thermoplastics hoses is that thermoplastic materials such as nylons, urethanes and co-polyesters can be used which inherently possess excellent chemical resistance to a wide variety of solvents, oils, fuels and other chemicals. This advantage, however, also poses a challenge to the hose manufacturer, in that the excellent chemical reistance of these thermoplastics makes it difficult to obtain adhesives which will chemically bond to the relatively inert surfaces of the core tube and cover of the hose. In addition, the typical textile fibre reinforcements of these hoses, such as polyester, nylon or aramid yarns are also relatively inert and hard to bond. To solve these problems, hose manufacturers have found various adhesive chemicals, particularly, urethane adhesives to use for thermoplastic hoses that are textile yarn reinforced. However, until now, there has been no reliable method for adhesively bonding a thermoplastic hose where the main reinforcement is steel wire.

An example of prior art in the construction of steel wire reinforced thermoplastic hose is Patent Specification US-A-4,341,578 of Chermak et al, which teaches the localized heating of a braided wire layer by an induction heating process. In the Chermak method, the induction heating of the wire braid is performed during or after the braiding process and causes localized generation of heat in the steel wire which is conducted to the outer surface of the thermoplastic core tube. As a result, thermal expansion of the core tube is achieved, which results in protrusion of core tube material through interstices and small openings in the wire braid. It is taught that these protrusions can be thermally fused to a compatible thermoplastic cover material in a subsequent cover crosshead extrusion process. The disadvantages of this procedure as an optimum means of hose construction are important and are as follows :

Cover material is chosen for maximum flexibility and abrasion and wear resistance. Typical cover materials such as polyurethanes have flexural moduli of 48 MPa (7000 PSI) compared to nylon or co-polyester core tube materials with flexural moduli of 207 to 345 MPa (30000 to 50000 PSI). Other cover materials are thermoplastic elastomers such as Santoprene, which is a trademark for such material produced by Monsanto Industrial Chemicals Co. The cover is thus much more flexible than the core tube material. Optimally, core tube material is chosen for toughness, chemical resistance and high tensile strength. Typical core tube materials are Hytrel, which is a trademark for a DuPont Co. thermoplastic co-polyester and nylon. With core tube material chosen to be less flexible than cover material, it is furthermore stiffened when it is mechanically oriented by flow through small reinforcement openings. Thus, the construction described by Chermak will tend to stiffen the hose excessively by interlocking high tensile strength and high flexural moduli material between the braided strands and reducing the mobility of the wires accordingly. This will disadvantageously affect the flexibility and service life of the hose, particularly when the hose is subjected to pulsating pressures in service. This effect is increased because of the reduction in average core tube thickness due to the loss of material that expands outward through the reinforcement.

The cover in Chermak is extruded over a wire braid and is supposed to fuse with the core tube protrusions. If the core tube is nylon or co-polyester, however, and the cover is urethane, then the tube and cover materials will not physically wet each other sufficiently to bond unless the cover extrusion is at an impractical high temperature sufficient to melt the core tube surface to achieve mutual fusion. For example, the melt point of Hytrel 5556, a commonly used core tube material is about 211°C (412°F), while the typical urethane extrusion temperature is less than 190°C (375°F). Clearly, the urethane will not thermally fuse with the Hytrel in this process. Further, even if the melt temperatures were closer together, the economical line speed for cover extrusion is so fast that the tube protrusions could not be heated sufficiently to soften or melt before the cover was quenched in the cooling tank just downstream of the crosshead extrusion die.

Relative to investment economy, it is noted that one cover extrusion line has the capacity to match 5 to 8 braiders in hose throughput. This means that in the case of the Chermak process, 5 to 8 induction heaters, an expensive equipment item, might have to be provided, one at each braider line to match the capacity of one extruder line. The alternative is an extra "off-line" process just to induction heat the wire braid as described by Chermak which would also cause high operating cost.

Another disadvantage of the prior art process has to do with the so-called "hybrid" hose constructions in which there is an inner textile braid and an outer steel wire braid. Such a hose construction is described in Patent Specification US-A-4,384,595 of Washkewicz et al. It is not desirable in this construction to cause tube protrusion through the inner braid as it would interfere with yarn mobility and prevent stress transfer from the inner to the outer braid.

According to one aspect of the invention there is provided a method of forming reinforced thermoplastics hose comprising extruding a continuous thermoplastics core tube, winding at least one layer of reinforcement over the core tube in closely spaced windings to form a reinforced core tube wherein outer winding material of the reinforcement is ferrometallic wires having minute spaces between the wires, characterised by the steps of heating the outer wire windings by passing the reinforced core tube through heater apparatus including an induction heater, immediately thereafter and at elevated temperature, pressure extruding thermoplastics cover material over the reinforced core tube and through the spaces of the heated reinforcement wire with the cover material being extruded through the spaces to a depth exceeding the depth of any penetration of the material of the core tube into the spaces, to form a composite hose structure to bond the cover material to the reinforcement wires to form an interlocking, integrated hose structure, and cooling the composite hose structure to bond the cover material to the reinforcement wires to form an interlocking, integrated cover reinforcement wire structure.

According to another aspect of the invention there is provided a reinforced thermoplastics hose, comprising an elongate core tube of thermoplastic material and reinforcement windings over the core tube in tight engagement with the core tube, outer reinforcement winding material of the windings comprising ferrometallic wires closely spaced to form minute spaces between the wires, characterized by a thermoplastics cover pressure extruded over the windings into the spaces between the windings with discrete projections of the cover extending through the reinforcement and into bonded engagement with the core tube to form an integrated composite hose structure whereby the reinforcement windings are mechanically locked to the core tube and the cover, the depth of penetration of the material of the thermoplastics cover into the spaces exceeding the depth of any penetration of the material of the core tube into the spaces.

In such a thermoplastic hose construction the thermoplastic cover is mechanically interlocked and thereby bonded with the steel wire reinforcement which may be brass plated steel wire, stainless steel wire or any other ferrometallic material capable of being induction heated. A controlled degree of combined mechanical and chemical bonding can be provided between the cover and the core tube material.

In one embodiment, the hose comprises the thermoplastic core tube, a steel wire braid for reinforcement and the thermoplastic cover. In another version, the reinforcement is an inner braid of textile yarn such as polyester, nylon or aramid fiber, and an outer braid of steel wire and the thermoplastic cover. In another version there is an inner steel wire braid, a thin thermoplastic interlayer, an outer steel wire braid and the thermoplastic cover. In other related constructions, the steel wire braid or braids can be replaced by spiral windings of steel wire. One feature common to all these constructions is that there are small spaces or openings between the wires as a result of both design and the process of braiding. As the wire reinforcement is wound over the core tube under tension the adjacent wires are drawn into tight engagement with the core tube and are placed closely adjacent one another leaving these minute spaces adjacent the overlapping wires. Such reinforced core tube is directed to a crosshead extruder line wherein the heater apparatus raises the temperature of the reinforcement wire. Such heating is preferentially done by induction heating, but may be supplemented by other types of heaters such as radiant infrared or open gas flame. The induction heater capacity should be sufficient to heat the mass of wire to a temperature higher than the normal extrusion temperature of the cover. By conduction, some of this thermal energy will heat and slightly soften the outer periphery of the core tube or any other layer under the outer wire reinforcement. Since thermoplastics are relatively poor thermal conductors the bulk of the core tube will be unaffected by the wire heating. Immediately after the induction heating unit, the reinforced core tube passes through a typical crosshead extruder for pressurized application of the thermoplastic cover. This extrusion process forces the cover, which is preferably more flexible than the tube material, through the small spaces between the wires and into contact with the underlying core tube or other layer. The higher the temperature of the wire surfaces, as a result of the induction heating, the greater will be the flow of cover material between the spaces in the wire reinforcement and the more likely that thermal fusion and mechanical interlocking will occur between the cover and the core tube and the cover and the wires respectively. According to conventional practice, a water cooling tank immediately follows the crosshead and the covered hose outer surface is quenched within a second or two of leaving the extruder. The rapid cooling of the outer surface of the cover, shrinks the cover onto the wire reinforcement and locks the structure together permanently. By this technique, there will be considerable mechanical interlocking of the cover with the wires, and, depending on the adjustment of the heater, there will be some adhesive contact between the cover and the core tube materials.

Where a hose contains more than one layer of reinforcement it may be undesirable or difficult to obtain core tube expansion through to the cover area as in the prior art. In this case, the very high temperature achieved by induction heating of the wire surface produces excellent fusion and interlocking of cover and wire without need for cover to tube contact.

The method of the invention can have the possibility of excellent control of the significant parameters. Infrared preheat power, induction heater power, distance between induction heater stage and crosshead extruder, and crosshead die temperature can all be varied relative to cover extrusion line speed so that the wire temperature and core tube temperature are, in effect, individually controllable. Thus, the degree of cover penetration can be maximized while keeping the degree of core tube protrusion to a minimum if desired.

Previous art such as Chermak, et al requires high internal air pressure during heating to force softened tube through the reinforcement from inside and to prevent pinholes in the tube. In the method of the invention, the main penetration can be of the cover into the braid from outside so that internal air pressure during extrusion need not be as high or as critical and there is no danger of tube pinholes created by excessive tube heating. By performing the induction heating in line with cover extrusion and controlling induction generator power and line speed, very high wire temperatures can be obtained without unduly heating the core tube. This greatly enhances the wettability of the wire surface and the flow of cover material into the reinforcement thereby providing optimum adhesion.

Advantageously the heater apparatus includes a preheater in front of the induction heater.

The preheater stage will act to vapourize a substantial part of the absorbed oils and moisture on the wire surface which would otherwise reduce adhesion. The preheater can also provide some elevation of the wire temperature which will reduce the power needed for the following induction heating stage. The induction heater rapidly raises wire temperature and vapourizes most of the remaining surface contaminants on the wire. The heating effect can be powerful enough to cause controlled embedment of the core tube in the wire interstices if desired. Also, these protrusions will be at an elevated temperature entering the crosshead extruder. It is important to limit the core tube protrusion effect, as previously explained, and to obtain the cover adhesion and hose integrity primarily by directed flow of the softer, more flexible cover material. Finally, the heated hose structure reaches the crosshead die area where the wire temperature is sufficient to create a thin layer of low viscosity cover material. The nature of the extrusion process is that the flow through the die in a covering operation comprises two parts : drag flow and pressure flow. The drag flow is due to a relative velocity difference between faster moving hose and slower moving extrudate. Obviously, the low viscosity layer created by the high temperature wire surface will act as a thin, molten adhesive layer which is forced by the crosshead vacuum to fill up any small spaces between the wires. At the die exit, the higher viscosity extrudate in the bulk of the flow channel and under elevated pressure will force the thin adhesive layer further into the wire spaces. As soon as the exiting covered hose is quench-cooled in the downstream cooling tank, the outer surface of the cover contracts and the structure is locked into position.

The invention is diagrammatically illustrated by way of example in the accompanying drawings, in which :

Figure 1 is a cutaway view of a single wire braid reinforced thermoplastics hose according to the invention ;

Figure 2 is a cutaway view of a hybrid hose according to the invention with a textile inner braid and a wire outer braid ;

Figure 3 is a cutaway view of a two wire braid hose according to the invention with the braids separated by a thin thermoplastic layer ;

Figure 4 is an enlarged overview of a typical wire braid reinforcement surface, showing in detail spaces between wire strands and the interstices where the wire strands cross over each other ;

Figure 5 is an enlarged cross section view, taken on line 5-5 of Figure 4 of the hose of Figure 1, showing cover penetration ; and

Figures 6, 7 and 8 are schematic diagrams showing illustrating a method of forming reinforced thermoplastics hose according to the invention.

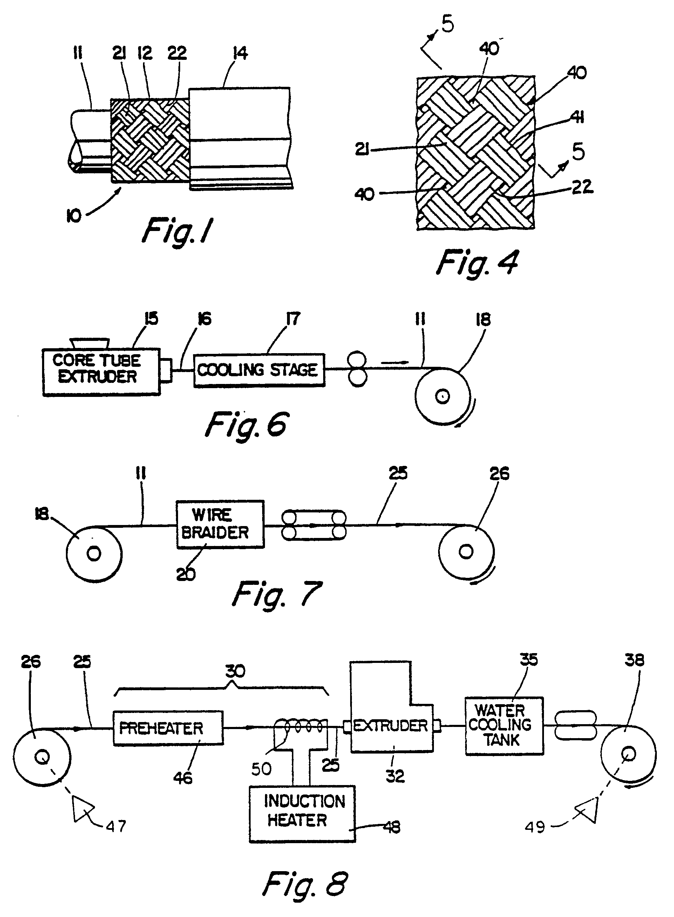

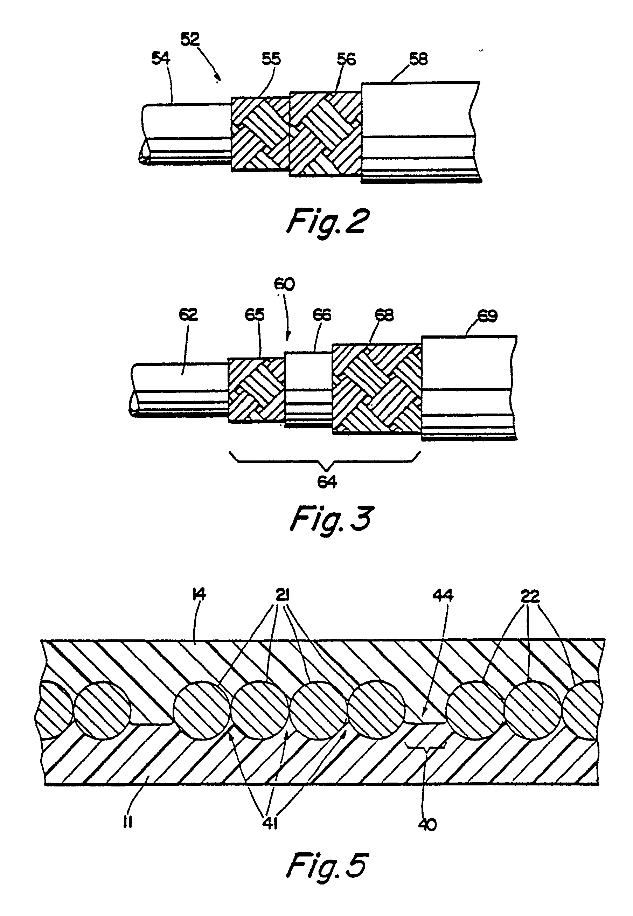

Referring initially to Figure 1, a hose 10 comprises a core tube 11, a braided wire reinforcement layer 12 and an outer cover 14. Construction of the hose 10 is illustrated in Figures 6 to 8, wherein the core tube 11 is obtained from a conventional extruder 15 in a manner well understood in the art, is cooled in a cooling stage 17 and wound onto a storage reel 18. As shown in Figure 7, the core tube 11 is supplied from the storage reel 18 and delivered to a braider or winding stage 20 for application of the reinforcement 12 to the core tube 11 in a predetermined pattern. The pattern may be a conventional spiral winding of the hose structure, wherein a first layer of reinforcement wire is wound in one direction over the core tube and a second layer of reinforcement wire is wound in an opposite direction over the first layer, but preferably the reinforcement layer 12 is applied as an interwoven braid of reinforcement wires 21, 22 in a manner well understood in the art. A reinforced core tube structure 25 so formed is then wound on a storage durm 26 for further processing.

In Figure 8, the same storage drum 26 is depicted for supply of material. The reinforced core tube structure 25 is directed to a heater zone 30 for elevation of temperature of the reinforcement wire 12 as well as the outer periphery of the core tube 11 and the core tube structure 25 is immediately passed through a cover extruder 32 for application of the cover 14. Thereafter, the composite structure is passed to a cooling stage 35 and eventually to a hose windup reel 38.

As shown in Figure 4, the reinforcement wires 21, 22 comprise a braid of alternately interwoven wires wound in opposite directions about the core tube 11 in a typical over and under pattern. Each of the reinforcement wires 21, 22 may comprise one or more wire strands as depicted, the strands in each wire being laid closely adjacent one another in a side by side or overlapping relationship and the crossing wires drawn tightly into engagement with one another. Even though the braid thus achieved is relatively close or tight, small spaces 40 will occur at the intersections of the adjacent reinforcement wires 21, 22 through which the core tube 11 is exposed. Further spaces 41 will occur as well between adjacent strands of the wires 21, 22 even as the strands are overlapped and all of these spaces or interstices 40, 41 serve as locations for permeation by the cover 14, for interlocking of the hose structure. This relationship is shown more clearly in the enlarged fragmentary view of Figure 5, wherein just one intersection of the reinforcement wires 21, 22 is depicted in relation to the core tube 11 and the cover 14. In this view, the spaces 41 between adjacent strands of the wire 21 appear to be substantially closed, but this is dependent upon the lay and spacing of the strands and in most instances results in a significant opening.

In the enlarged fragmentary view of Figure 5, the space between adjacent reinforcement wires 21, 22 is seen more clearly as the area enclosed by the bracket identified by numeral 40. As initial heating of the reinforcement wires 21, 22 occurs and as heat is transmitted to the periphery of the core tube 11 a partial embedment of the reinforcement wires 21, 22 into the surface of the core tube 11 takes place due to the thermal expansion of the core tube. This embedment increases the mechanical bond between the reinforcement wires and the core tube 11. As the cover 14 is extruded over the thus reinforced core tube structure 25, the minute spaces 41 between adjacent strands of the wires 21 or 22 are filled as well as the spaces 40 between the crossing reinforcement wires 21, 22 as depicted by a projection 44 of the cover. The cover projection 44 extends substantially the full depth of the reinforcement wires 21, 22 into engagement with the exterior surface of the core tube 11 and due to the elevated temperature thereof causes a localized further heating of the core tube 11 and an intermixing of the surfaces therebetween. The cross head extruder 32 provides a pressure extrusion of the cover 14 onto the reinforced core tube structure 25 which not only provides the final outside diameter of the hose structure 10, but also forces the material of the cover 14 into the spaces and interstices of the hose structure.

The heater stage 30 is depicted in Figure 8 as comprising an initial heater or preheater 46 and an induction heater 48. Many variations are possible for the heater zone, however, it is preferable to include the induction heater 48 as an essential element of such heater stage inasmuch as a preferred heating characteristic is achieved thereby since the induction method heats steel wire directly but plastics only indirectly. The preheater heater 46 may comprise a radiant heater, an open-flame arrangement or conventional convection type heater or similar device as the primary purpose is to elevate the temperature of the steel wires 21, 22 from an ambient temperature condition with the final heating process being substantially completed in the induction heater 48. However, the preheater 46 is not mandatory and the entire heating process can be achieved by the induction heater 48, in conjunction with heat derived from the crosshead extruder 32.

The induction heater 48 has the advantages that the heating effect can be achieved at a particular desired location and that a great amount of heat can be applied to a rapidly moving extrusion line. Further, induction heat is a relatively safe process requiring only electrical energy and the establishment of a magnetic field through which the reinforced core tube structure 25 is passed. Regarding the localization of the heating effect, only the reinforcement wires 21, 22 are influenced by the magnetic field of the induction heater 48. The localized heating primarily raises the temperature of the reinforcement layer 12 but also heats by conduction the adjacent periphery of the core tube 11. The induction heater 48 comprises a high frequency electrical generator coupled to an induction heater coil 50 which is typically one or more turns of copper tubing wound in the form of a helical coil and through which the reinforced core tube structure 25 is passed in a manner known in the art. The energy supplied by the induction heater 48 must be considerable in order to elevate the temperature of the reinforcement wires 21, 22 to a desired level. Although heat may be applied solely by an induction heater 48 having a relatively high capacity, it may be advantageous as well to supply additional heat energy by means of the preheater 46. The preheater also vapourizes most of the residual wire lubricant left on the wire during braiding so that this is not carbonized in the induction heater stage.

The resulting product is the hose 10 having an integrated structure, wherein the cover 14, the core tube 11 and the reinforcement wires 21, 22 are mechanically locked together by means of the localized grips provided by the plurality of projections occuring at each of the spaces 40, 41 such as the projections 44. Such an integrated structure is advantageous in maintaining the integrity of the hose 10 and provides superior fatigue and flexibility characteristics when joined with a coupling in a typical hydraulic power system.

Further, the reinforced core tube structure 25 depicted in Figure 8 may be supported internally in various manners known in the art. If required, it is possible to support the interior thereof by means of air under pressure supplied through suitable coupling unions as depicted schematically at 47, 49 in Figure 8. Such a process would include the prior formation of a reinforced core tube structure 25 as supplied from a storage reel or the like and which is then supplied to the heater zone 30 and subsequent cover extruder 32 in the manner described previously. In such an air support arrangement, the inner surface of the core tube 11 may be maintained at a relatively low temperature level and, thereby, not be influenced by the heat energy supplied at the heater zone 30, limiting the heating effect to the outer periphery of the core tube 11 and not affecting the interior sizing. It is apparent then that in this arrangement, possibly even greater heat is required of the heater zone 30 to elevate the temperature of the reinforced core tube structure 25 to a level at which proper bonding between the cover 14 and the core tube 11 occurs. Quick cooling in the cooling stage 35 by water quenching of the hose immediately after the crosshead extruder 32 provides shrinkage forces to enhance and maintain the bond formed in the extrusion die until the entire structure has cooled. This process can also be aided by the internal air pressure maintained during the entire operation.

Referring to Figure 2, another example of hose 52 is shown to comprise a thermoplastic core tube 54, a first reinforcement layer 55, a second reinforcement layer 56, and a thermoplastic cover 58. The first reinforcement layer 55 is a textile braid wound in a conventional pattern and leaving openings between the adjacent windings similar to the openings 40, 41 previously described with respect to the embodiment of Figure 1. The second reinforcement layer 56 is a wire braid also with similar openings which provide a path for extrusion of the cover 58 into bonding engagement with the core tube 54 in the manner previously described. In this embodiment however, passage of the second reinforcement layer 56 through an induction heater zone provides less of an effect upon the core tube 54 due to the intervening first reinforcement structure 55. However, a similar result obtains, so that bonding occurs between the cover 58 and the core tube 54 as well as the mechanical encapsulation of the wires of the second reinforcement layer 56. In the case where the inner layer 55 gives essentially 100% coverage, the net result will be an interlocked cover and wire layer without tube to cover contact. In this case, (referring to the example in Figure 2 where the inner textile braid gives essentially 100% coverage) the inner textile braid may be adhesively bonded to the core tube by a chemical adhesive such as a moisture-curing polyurethane.

Yet another embodiment of hose 60 is depicted in Figure 3. Here a thermoplastic core tube 62 is covered with reinforcement 64 comprising individual layers of a first wire or textile reinforcement 65, an interlayer 66 and a second wire braid 68. The structure is jacketed with a thermoplastic cover 69 by a pressure extrusion technique so that spaces throughout the reinforcement 64 are filled by either the interlayer 66 or the cover 69, and bonding contact achieved with the core tube 62. A similar heating of the reinforced core tube by induction heating means or combined induction heating and other heating devices can achieve a hose condition particularly suited for movement of the cover 69 and interlayer material 66 throughout the reinforcement 64 and into engagement with the core tube 62, as well as a mechanical interlock achieved with the second reinforcement layer 68. The interlayer 66 may be a material commonly used for separation of adjacent reinforcement layers and will be selected for compatibility in bonding to either the core tube or cover as well as its abrasion resistant characteristics. This applies to many different thermoplastic materials. Further, an interlayer such as 66 could be used in a construction wherein the first reinforcement 65 comprises a first textile braid, in either an open or one hundred percent coverage weave, covered in turn by a wire reinforcement layer or by an inner layer end a wire reinforcement layer, with the remainder of the structure covered by the interlayer 66, the outer wire braid 68 and the cover 69.

## Claims

1. A method of forming reinforced thermoplastics hose (10, 52, 60) comprising

extruding a continuous thermoplastics core tube (11, 54, 62),

winding at least one layer (12, 55, 56, 64) of reinforcement over the core tube in closely spaced windings to form a reinforced core tube (25) wherein outer winding material (12, 56, 68) of the reinforcement is ferrometellic wires having minute spaces (40, 41) between the wires, characterised by the steps of

heating the outer wire windings (12, 56, 68) by passing the reinforced core tube through heater apparatus (30) including an induction heater (48), immediately thereafter and at elevated temperature, pressure extruding thermoplastics cover material (14, 58, 69) over the reinforced core tube (25) and through the spaces (40, 41) of the heated reinforcement wire (12, 56, 68) with the cover material (14, 58, 69) being extruded through the spaces (40, 41) to a depth exceeding the depth of any penetration of the material of the core tube (11, 54, 62) into the spaces (40, 41), to form a composite hose structure to bond the cover material (14, 58, 69) to the reinforcement wires to form an interlocking, integrated hose structure, and cooling the composite hose structure to bond the cover material to the reinforcement wires to form an interlocking, integrated cover reinforcement wire structure.

2. A method according to claim 1, wherein the heater apparatus (30) further comprises a preheater (46) in front of the induction heater (48).

3. A method according to claim 1 or claim 2, wherein the core tube (10, 52, 60) is internally supported during the winding, heating and pressure extruding steps.

4. A method according to any one of claims 1 to 3, wherein the cooling step comprises quenching the composite hose structure in water.

5. A method according to any one of claims 1 to 4, wherein the cooling step includes passing cool fluid through the core tube (10, 52, 60) substantially to maintain the integrity of the core tube and confine bonding to the peripheral surface thereof.

6. A method according to any one of claims 1 to 5, wherein the winding step comprises braiding the ferrometallic wires.

7. A reinforced thermoplastics hose (10, 52, 60), comprising an elongate core tube (11, 54, 62) of thermoplastic material and reinforcement windings (12, 55, 56, 64) over the core tube in tight engagement with the core tube, outer reinforcement winding material of the windings comprising ferrometallic wires (12, 56, 68) closely spaced to form minute (40, 41) spaces between the wires, characterized by a thermoplastics cover (14, 58, 69) pressure extruded over the windings into the spaces (40, 41) between the windings with discrete projections of the cover extending through the reinforcement and into bonded engagement with the core tube to form an integrated composite hose structure whereby the reinforcement windings are mechenically locked to the core tube and the cover, the depth of penetration of the material of the thermoplastics cover (14, 58, 69) into the spaces exceeding the depth of any penetration of the material of the core tube (11, 54, 62) into the spaces.

8. A reinforced hose according to claim 7, wherein the windings are in the form of wire spirals wound in opposite directions.

9. A reinforced hose according to claim 7, wherein the windings are in the form of a steel wire braid (56, 68).

10. A reinforced hose according to claim 7, wherein the windings are in the form of an inner fibre braid (65) and an outer steel wire braid (68).

11. A reinforced hose according to claim 7, wherein the windings are in the form of an inner steel wire braid and an outer steel wire braid (68) with a separating layer (66) between the braids.

**Ansprüche**

1. Verfahren zur Herstellung eines verstärkten thermoplastischen Schlauchs (10, 52, 60) mit folgenden Schritten :

Extrudieren eines kontinuierlichen thermoplastischen Kernschlauchs (11, 54, 62),

Aufwickeln von zumindest einer Schicht (12, 55, 56, 64) aus Verstärkungsmaterial auf den Kernschlauch in nahe aneinanderliegenden Windungen zur Bildung eines verstärkten Kernschlauchs (25), bei welchem das äußere Wickelmaterial (12, 56, 68) der Verstärkung aus eisenmetallischen Drähten besteht, wobei nur sehr geringe Abstände (40, 41) zwischen den Drähten bestehen, gekennzeichnet durch folgende Verfahrensschritte :

Erhitzen der äußeren Drahtwickelungen (12, 56, 68) durch Durchführen des verstärkten Kernschlauchs durch eine Heizvorrichtung (30), welche einen Induktionsofen (48) umfaßt,

Druckextrudieren eines thermoplastischen Hüllmaterials (14, 58, 69) unmittelbar danach und bei erhöhten Temperaturen über den verstarkten Kernschlauch (25) und durch die Zwischenraume (40, 41) der erhitzten Verstärkungsdrähte (12, 56, 68), wobei das Hüllmaterial (14, 58, 69) durch die Zwischenräume (40, 41) hindurchextrudiert wird, bis zu einer Tiefe, welche die Tiefe des Eindringens des Materials des Kernschlauchs (11, 54, 62) in die Zwischenräume (40, 41) überschreitet, um eine zusammengesetzte Schlauchstruktur zu schaffen, in der das Hüllmaterial (14, 58, 69) mit den Verstärkungsdrähten eine verblockte, integrierte Schlauchstruktur bildet, und

Abkühlen der zusammengesetzten Schlauchstruktur, um das Hüllmaterial mit den Verstärkungsdrähten zu verbinden, um eine verblockte, integrierte mit Drähten verstärkte Hüllschichtstruktur zu erhalten.

2. Verfahren nach Anspruch 1, in welchem die Heizvorrichtung (30) zusätzlich einen Vorerhitzer (46) vor dem Induktionsofen (48) umfaßt.

3. Verfahren nach Anspruch 1 oder 2, in welchem der Kernschlauch (10, 52, 60) während des Wickel-, Heiz- und Druckextrusionsschritts gestützt wird.

4. Verfahren nach einem der Ansprüche 1 bis 3, in welchem der Kühlschritt ein Abschrecken der zusammengesetzten Schlauchstruktur in Wasser beinhaltet.

5. Verfahren nach einem der Ansprüche 1 bis 4, in welchem der Kühlschritt beinhaltet, daß ein Kühlfluid durch den Kernschlauch (10, 52, 60) geleitet wird, um die Struktur des Kernschlauchs im wesentlichen beizubehalten und das Verblocken auf dessen äußere Oberfläche zu begrenzen.

6. Verfahren nach einem der Ansprüche 1 bis 5, in welchem der Wickelschritt das Flechten der eisenmetallischen Drähte umfaßt.

7. Verstärkter thermoplastischer Schlauch (10, 52, 60) mit einem langgestreckten Kernschlauch (11, 54, 62) aus thermoplastischem Material und Verstärkungswicklungen (12, 55, 56, 64) über dem Kernschlauch, welche dicht an dem Kernschlauch anliegen, wobei das äußere Verstärkungswicklungsmaterial der Wicklungen eisenmetallische Drähte (12, 56, 68) umfaßt, welche nahe aneinander angeordnet sind, so daß nur sehr enge Zwischenräume (40, 41) zwischen den Drähten geformt werden, gekennzeichnet durch eine thermoplastische Hüllschicht (14, 58, 69) welche über die Wicklungen in die Zwischenräume (40, 41) druck-extrudiert werden, wobei diskrete Vorsprünge der Hüll schicht durch die Verstärkung hindurchragen und mit dem Kernschlauch in verblockten Eingriff gehen, um eine integrierte zusammengesetzte Schlauchstruktur zu bilden, während die Verstärkungswicklungen mechanisch mit dem Kernschlauch und der Deckschicht verankert sind, wobei die Tiefe des Eindringens des Materials der thermoplastischen Deckschicht (14, 58, 69) in die Zwischenräume die Tiefe jeglichen Durchdringens des Materials des Kernschlauchs (11, 54, 62) in die Zwischenräume übersteigt.

8. Verstärkter Schlauch nach Anspruch 7, in welchem die Wicklungen die Form einer Drahtspirale, welche in entgegengesetzte Richtungen gewickelt ist, aufweisen.

9. Verstärkter Schlauch nach Anspruch 7, in welchem die Wicklungen die Form eines Stahldrahtgeflechts (56, 68) annehmen.

10. Verstärkter Schlauch nach Anspruch 7, in welchem die Wicklungen in Form eines inneren Fasergeflechts (65) und eines äußeren Stahlbandgeflechts (68) gewickelt sind.

11. Verstärkter Schlauch nach Anspruch 7, in welchem die Wicklungen in Form eines inneren Stahldrahtgeflechts und eines äußeren Stahldrahtgeflechts (68) mit einer Zwischenschicht (66) zwischen den Geflechten gewickelt sind.

**Revendications**

1. Procédé de mise en forme d'un tuyau de matière thermoplastique renforcé (10, 52, 60) comprenant
l'extrusion d'un tube à noyau en matière thermoplastique continu (11, 54, 62),
l'enroulement d'au moins une couche (12, 55, 56, 64) de renforcement sur le tube à noyau en spires très serrées pour former un tube à noyau renforcé (25) dans lequel le matériau d'enroulement extérieur (12, 56, 68) du renforcement est constitué par des fils ferrométalliques présentant de tout petits intervalles (40, 41) entre les fils, procédé caractérisé en ce qu'il comprend les différentes étapes consistant à chauffer les enroulements de fil extérieurs (12, 56, 68) en faisant passer le tube à noyau renforcé dans un appareil de chauffage (30) comprenant un dispositif de chauffage à induction (48), juste après et à température élevée, pour extruder sous pression, un matériau du fourreau thermoplastique (14, 58, 69) sur le tube à noyau renforcé (25) et dans les intervalles (40, 41) du fil de renforcement chauffé (12, 56, 68), le matériau du fourreau (14, 58, 69) étant extrudé dans les intervalles (40, 41) jusqu'à une profondeur supérieure à la profondeur d'une pénétration quelconque du matériau du tube à noyau (11, 54, 62) dans les intervalles (40, 41), de manière à former une structure de tuyau composée pour lier le matériau du fourreau (14, 58, 69) aux fils de renforcement en formant ainsi une structure de tuyau intégrée à emboîtement, et à refroidir la structure de tuyau composée pour lier solidement le matériau du fourreau aux fils de renforcement de manière à former une structure intégrée du fourreau et de fils de renforcement s'emboîtant ou s'enclenchant ensemble.

2. Procédé selon la revendication 1, caractérisé en ce que l'appareil de chauffage (30) comprend en outre un dispositif de préchauffage (46) en face du dispositif de chauffage à induction (48).

3. Procédé selon l'une quelconque des revendications 1 et 2, caractérisé en ce que le tube à noyau (10, 52, 60) est supporté intérieurement pendant les étapes d'enroulement, de chauffage et d'extrusion sous pression.

4. Procédé selon l'une quelconque des revendications 1 à 3, caractérisé en ce que l'étape de refroidissement comprend la trempe dans l'eau de la structure de tuyau composée.

5. Procédé selon l'une quelconque des revendications 1 à 4, caractérisé en ce que l'étape de refroidissement consiste à faire passer un fluide de refroidissement dans le tube à noyau (10, 52, 60) essentiellement pour maintenir l'intégrité du tube à noyau et limiter la liaison à sa surface périphérique.

5. Procédé selon l'une quelconque des revendications 1 à 5, caractérisé en ce que l'étape de refroidissement consiste à faire passer un fluide refroidissement dans le tube à noyau (10, 52, 60) essentiellement pour maintenir l'intégrité du tube à noyau et limiter la liaison à sa surface périphérique.

6. Procédé selon l'une quelconque des revendications 1 à 5, caractérisé en ce que l'étape d'enroulement comprend le tressage des fils ferrométalliques.

7. Tuyau de matière thermoplastique renforcé (10, 52, 60), comprenant un tube à noyau allongé (11, 54, 62) en matière thermoplastique et des enroulements de renforcement (12, 55, 56, 64) formés sur le tube à noyau en contact serré avec ce tube à noyau, le matériau d'enroulement de renforcement extérieur des enroulements comprenant des fils ferrométalliques (12, 56, 68) très rapprochés pour former de tout petits intervalles (40, 41) entre les fils, tuyau caractérisé en ce qu'il comprend un fourreau de matière thermoplastique (14, 58, 69) extrudée sous pression sur les enroulements dans les intervalles (40, 41) entre les spires de façon que des projections discontinues du fourreau pénètrent dans le renforcement et viennent en contact de liaison avec le tube à noyau pour former une structure de tuyau composée intégrée, ce qui permet ainsi aux enroulements de renforcement d'être fixés solidement de façon mécaniques au tube à noyau et au fourreau, la profondeur de pénétration du matériau du fourreau thermoplastique (14, 58, 69) dans les intervalles étant supérieure à la profondeur d'une pénétration quelconque du matériau du tube à noyau (11, 54, 62) dans les intervalles.

8. Tuyau de matière thermoplastique renforcé selon la revendication 7, caractérisé en ce que les enroulements se présentent sous la forme de spires de fil enroulées en sens opposés.

9. Tuyau de matière thermoplastique renforcé selon la revendication 7, caractérisé en ce que les enroulements se présentent sous la forme d'une tresse de fils d'acier (56, 68).

10. Tuyau de matière thermoplastique renforcé selon la revendication 7, caractérisé en ce que les enroulements se présentent sous la forme d'une tresse de fibres intérieure (65) et d'une tresse de fils d'acier extérieure (68).

11. Tuyau de matière thermoplastique renforcé selon la revendication 7, caractérisé en ce que les enroulements se présentent sous la forme d'une tresse de fils d'acier intérieure et d'une tresse de fils d'acier extérieure (68) avec une couche de séparation (66) entre les tresses.

Fig. 1

Fig. 4

Fig. 6

Fig. 7

Fig. 8

52

54  55  56  58

**Fig.2**

60

62  65  66  68  69

64

**Fig.3**

14  21  44  22

11  41  40

**Fig.5**